# EUROPÄISCHE PATENTANMELDUNG

(11) **EP 4 368 568 A1**
(43) Veröffentlichungstag der Anmeldung: **15.05.2024**
(21) Anmeldenummer: 22206168.1
(22) Anmeldetag: 08.11.2022
(51) Int. Cl.: C01B 3/38, F28D 7/16

(54) **REAKTORSYSTEM ZUR ERZEUGUNG VON SYNTHESEGAS**

(71) Anmelder: WS Reformer GmbH, 71272 Renningen (DE)
(72) Erfinder: Schmid, Hans-Peter, 73666 Hohengehren (DE); Cresci, Enrico, 70499 Stuttgart (DE)
(74) Vertreter: Patentanwälte Ruff, Wilhelm, Beier, Dauster & Partner mbB

(57) **Zusammenfassung**

Die Erfindung betrifft ein Reaktorsystem (1) und ein Verfahren zur partiellen Oxidation eines kohlenstoffhaltigen Gasgemischs, insbesondere zur Erzeugung von Synthesegas, in einem Reaktorsystem (1), wobei das Reaktorsystem (1) eine Brennkammer (2) für eine partielle Oxidation und eine der Brennkammer (2) nachgeschaltete Katalysatorkammer (3) mit einem Katalysator für eine Dampfreformierung umfasst, wobei die Katalysatorkammer (3) in einem indirekten thermischen Kontakt zu der Brennkammer (2) steht und in der Katalysatorkammer (3) ablaufenden endothermen Reaktionen Wärme aus der Brennkammer (2) zugeführt wird. Das Synthesegas dient in Ausgestaltungen als Zwischenprodukt zur Erzeugung von E-Fuels.

## Beschreibung

Die Erfindung betrifft ein Reaktorsystem und ein Verfahren zur partiellen Oxidation eines kohlenstoffhaltigen Gasgemischs, insbesondere zur Erzeugung von Synthesegas. Das Synthesegas dient in Ausgestaltungen als Zwischenprodukt zur Erzeugung von E-Fuels.

Als Synthesegase bezeichnet man Wasserstoff und Kohlenoxide enthaltende Gasgemische. Als E-Fuel (Abkürzung von englisch electrofuel, auch Elektro-Kraftstoff oder E-Kraftstoff) werden synthetische Kraftstoffe aus regenerativem Wasserstoff und Kohlenstoff als Wasserstoffträger, insbesondere Methanol und höhere Kohlenwasserstoffe, bezeichnet. Ziel eines Einsatzes von E-Fuels ist eine Minderung einer Emission von Kohlenstoffdioxid (auch Kohlendioxid, kurz CO2), indem fossile Energieträger durch E-Fuels ersetzt werden.

Für eine CO2-neutrale Wertschöpfungskette bei der Erzeugung des Synthesegases kann der Kohlenstoff beispielsweise aus CO2 in der Luft (ca. 400ppm), aus Abgasen der vollständigen Verbrennung fossiler Energieträger (CO2-Anteil ca. 10%), aus Kalzinierung in der Zementherstellung oder biogenen Kohlenstoff-Quellen gewonnen werden.

Biogene Kohlenstoff-Quellen zeichnen sich dadurch aus, dass in der Luft vorhandenes CO2 durch Pflanzen aufgenommen wird. In der Photosynthese wird das CO2 mit Wasser und Sonnenlicht in feste Biomasse mit typischer massenbezogener Zusammensetzung C/H/O=50/6/42 gewandelt.

Dabei ist es bekannt, Synthesegas über thermochemische oder biologisch/fermentative Verfahren aus Biomasse zu erzeugen. Insbesondere ist es bekannt, Synthesegas mittels partieller Oxidation, bei welcher ein unterstöchiometrisches Brennstoff-Sauerstoff-Gemisch in einem Reaktorsystem teilweise verbrannt wird, zu erzeugen.

Beispielsweise beschreibt EP 3 792 216 ein Verfahren zur Herstellung eines Wasserstoff und Kohlenoxide umfassenden Synthesegases durch nichtkatalytische partielle Oxidation eines Pyrolyseöls, wobei einer Reaktionskammer über einen Brenner die Medien Pyrolyseöl, Wasserdampf als Moderator und Sauerstoff als Oxidationsmittel zugeführt werden. Ein die Reaktionskammer verlassender Rohsynthesegasstrom wird in einer Abkühlkammer auf eine Temperatur zwischen 150 und 250 °C abgekühlt. Ein dabei anfallendes. heißes, flüssiges, mit Feststoffpartikeln beladenes Quenchmittel wird über zwei Wärmetauscher geführt, mittels welchen das Oxidationsmittel und stromabwärts in Strömungsrichtung des Quenchmittels das Pyrolyseöl erwärmt werden.

EP 1 842 830 A2 ein Reaktorsystem zur Erzeugung von Synthesegas durch partielle Oxidation in mehreren Stufen. Das Reaktorsystem umfasst eine erste Stufe umfassend eine erste Partialoxidationszone mit einem Brenner, dem ein Brennstoff, Wasserdampf als Moderator und Sauerstoff als Oxidationsmittel zugeführt werden, und eine in Fluidkommunikation mit der ersten Partialoxidationszone stehende, der ersten Partialoxidationszone nachgeschaltete erste katalytische Zone, in welcher ein erster Katalysator angeordnet ist. Nachfolgend der ersten Stufe ist dabei eine zweite Stufe umfassend eine zweite Partialoxidationszone und eine zweite katalytische Zone vorgesehen. Die dem Reaktorsystem zugeordneten Ausgangsstoffe werden gemäß EP 1 842 830 A2 vorgewärmt.

### AUFGABE UND LÖSUNG

Es sind Aufgaben der Erfindung, ein Reaktorsystem und ein Verfahren zur partiellen Oxidation eines kohlenstoffhaltigen Gasgemischs zu schaffen, insbesondere zur Erzeugung von Synthesegas, welche einen hohen Kohlenstoffnutzungsgrad aufweisen.

Diese Aufgaben werden gelöst durch die Gegenstände mit den Merkmalen der Ansprüche 1 und 11. Weitere vorteilhafte Ausgestaltungen ergeben sich aus den Unteransprüchen.

Gemäß einem ersten Aspekt wird ein Reaktorsystem zur partiellen Oxidation eines kohlenstoffhaltigen Gasgemischs, insbesondere zur Erzeugung von Synthesegas, geschaffen, umfassend eine Brennkammer für eine partielle Oxidation und eine der Brennkammer nachgeschaltete Katalysatorkammer mit einem Katalysator für eine Dampfreformierung, wobei die Katalysatorkammer als Ringkammer gestaltet ist, welche die Brennkammer zumindest abschnittsweise, in Ausgestaltungen über den gesamten Umfang, umgibt, und wobei die Ringkammer und die Brennkammer in thermischen Kontakt für eine indirekte Wärmeübertragung stehen.

Bei dem aus der Katalysatorkammer abgeführten Produktstrom handelt es sich bei einer Erzeugung von Synthesegas um das Synthesegas.

In der Brennkammer findet eine mit Wärmefreisetzung und Sauerstoffverbrauch einhergehende Oxidation statt.

Für eine hohe Wasserstoffausbeute und einen hohen Kohlenstoffnutzungsgrad ist der Brennkammer eine Katalysatorkammer nachgeschaltet. Die in der Katalysatorkammer stattfindende Dampfreformierung sowie die damit einhergehende Trockenreformierung und Wassergas-Shift-Reaktion sind endotherm. Durch die Anordnung der Katalysatorkammer in thermischen Kontakt mit der Brennkammer ist die in der Brennkammer aufgrund der exothermen Oxidation erzeugte Wärme in der Katalysatorkammer nutzbar. Bei geeigneter Bauweise kann dabei auf eine zusätzliche Wärmezufuhr verzichtet werden.

In einer Ausgestaltung ist ein Wärmetauscher vorgesehen, welcher eingerichtet ist, um der Brennkammer zugeführte Ausgangsstoffe mittels eines aus der Katalysatorkammer abgeführten Produktstroms zu erwärmen, wobei der Wärmetauscher einen ersten Medienkanal für die Ausgangsstoffe und einen zweiten Medienkanal für den Produktstrom aufweist. Als Medienkanal wird im Zusammenhang mit der Anmeldung ein Durchlass für einen Stoffstrom in dem Wärmetauscher bezeichnet. Der Medienkanal weist je nach Gestaltung mehrere, separate, parallel von einem Medium durchströmte Kanalabschnitte auf. Mittels des Wärmetauschers ist eine Vorwärmung der Ausgangsstoffe ohne zusätzliche Energiezufuhr möglich.

In einer Ausgestaltung ist eine Mischzone für ein Vormischen der kalten Ausgangsstoffe in einer Zuführung des ersten Medienkanals und/oder einer Zuführung des ersten Medienkanals vorgeschaltet vorgesehen. Die Vormischung der kalten Ausgangsstoffe vor der Brennkammer erlaubt eine homogene Reaktion in der Brennkammer für einen vollständigen Verbrauch des Sauerstoffs.

Die Mischzone weist zu diesem Zweck in einer Ausgestaltung eine turbulente, verwirbelnde Strömungsführung, beispielsweise in einem Kopf des Wärmetauschers, auf. Alternativ oder zusätzlich sind in einer Ausgestaltung in der Mischzone Turbulenzerzeuger, beispielsweise in Form von Rohreinbauten in der Zuführung des Wärmetauschers, vorgesehen.

Ein Auslass des ersten Medienkanals mündet in Ausgestaltungen in der Brennkammer und ist so dimensioniert, dass in der Brennkammer eine Rezirkulationszone geschaffen ist, wobei vorzugsweise der Auslass so dimensioniert ist, dass eine Austrittgeschwindigkeit der vorgemischten Ausgangsstoffe zwischen ca. 80 m/s und ca. 120 m/s beträgt. Eine Rezirkulation ist vorteilhaft für einen vollständigen Verbrauch des Sauerstoffs in der Brennkammer. Die Austrittgeschwindigkeit ist vorzugsweise deutlich höher als eine Flammengeschwindigkeit.

Für eine gute Wärmeübertragung ist der Wärmetauscher als Gegenstromwärmetauscher gestaltet. Der Wärmetauscher ist in Ausgestaltungen als Plattenwärmetauscher, insbesondere als Spiralwärmetauscher gestaltet.

In einer Weiterbildung des Reaktorsystems ist der Wärmetauscher als Rohrbündelwärmetauscher, insbesondere als Gegenstrom-Rohrbündelwärmetauscher, gestaltet, wobei der erste Medienkanal eine Vielzahl an parallel durchströmbaren Rohren umfasst. Rohrbündelwärmetauscher zeichnen sich durch ihre hohe Druckbeständigkeit aus. Zudem ist eine Gestaltung des Wärmetauschers als Rohrbündelwärmetauscher auch für eine konstruktive Realisierung des Reaktorsystems vorteilhaft.

Austrittsöffnungen der Rohre münden dabei in einer Ausgestaltung unmittelbar an der Brennkammer. Die Austrittsmündungen sind dabei in einem Kreis, vorzugsweise in mehreren konzentrischen Kreisen um eine Flamme angeordnet. Die Austrittsöffnungen dienen dabei als Düsen für eine Zuführung der Ausgangsstoffe zu der Brennkammer.

Die Zahl und Querschnittsform der Rohre ist dabei je nach Anwendungsfall durch den Fachmann geeignet wählbar. Die Rohre sind derart gestaltbar, dass erst in der Brennkammer eine Reaktion der Ausgangsstoffe erfolgt. In einer Ausgestaltung sind zu diesem Zweck Querschnitte der Rohre so dimensioniert sind, dass eine Aufenthaltszeit der vorgemischten Ausgangsstoffe in dem ersten Medienkanal kürzer ist als eine Selbstzündzeit der Ausgangsstoffe und/oder eine Strömungsgeschwindigkeit der Ausgangsstoffe in dem ersten Medienkanal höher ist als eine Brenngeschwindigkeit. Als Brenngeschwindigkeit wird dabei eine Ausbreitungsgeschwindigkeit einer Reaktionszone in ein brennbares Gas-Luftgemisch bezeichnet.

Ein Auslass der Ringkammer mündet in einer Ausgestaltung in dem zweiten Medienkanal des Wärmetauschers.

Gemäß einem zweiten Aspekt wird ein Verfahren zur partiellen Oxidation eines kohlenstoffhaltigen Gasgemischs, insbesondere zur Erzeugung von Synthesegas, in einem Reaktorsystem umfassend eine Brennkammer für eine partielle Oxidation und eine der Brennkammer nachgeschaltete Katalysatorkammer mit einem Katalysator für eine Dampfreformierung, geschaffen, wobei die Katalysatorkammer in einem indirekten thermischen Kontakt zu der Brennkammer steht und in der Katalysatorkammer ablaufenden endothermen Reaktionen Wärme aus der Brennkammer zugeführt wird.

In anderen Worten wird für die in der Katalysatorkammer stattfindende endotherme Reformierung Energie der in der Brennkammer stattfindenden exothermen Oxidation genutzt.

In einer Ausgestaltung ist dabei vorgesehen, dass der Brennkammer zugeführte Ausgangsstoffe mittels eines aus der Katalysatorkammer abgeführten Produktstroms in einem Wärmetauscher erwärmt werden. Die Ausgangsstoffe werden dabei in einer Ausgestaltung in dem Wärmetauscher oder vor einer Zufuhr zu dem Wärmetauscher vorgemischt.

### KURZBESCHREIBUNG DER ZEICHNUNGEN

Weitere Vorteile und Aspekte der Erfindung ergeben sich aus den Ansprüchen und aus der Beschreibung eines Ausführungsbeispielen der Erfindung, das nachfolgenden anhand der Figur erläutert ist. Dabei zeigt:

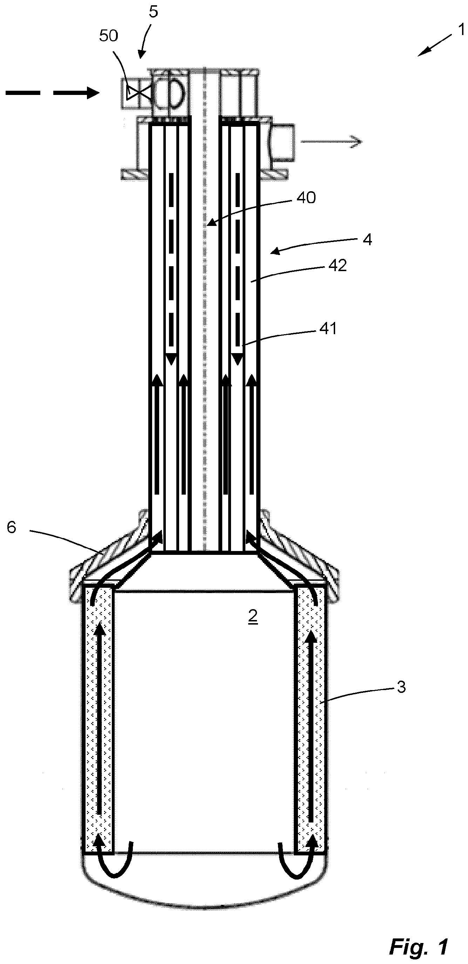

- Fig. 1: schematisch in einer Schnittansicht ein Ausführungsbeispiel eines Reaktorsystem zur katalytisch partiellen Oxidation eines kohlenstoffhaltigen Gasgemisches.

### DETAILLIERTE BESCHREIBUNG DER AUSFÜHRUNGSBEISPIELE

Fig. 1 zeigt schematisch ein Reaktorsystem 1 zur katalytisch partiellen Oxidation eines kohlenstoffhaltigen Gasgemisches, insbesondere zur Erzeugung von Synthesegas.

Das Reaktorsystem 1 umfasst eine Brennkammer 2, eine der Brennkammer 2 nachgeschaltete Katalysatorkammer 3 mit einem Katalysator für eine Dampfreformierung, und einen Wärmetauscher 4.

Die Katalysatorkammer 4 ist als Ringkammer gestaltet und umgibt die Brennkammer 2, wobei die Ringkammer und die Brennkammer 2 in thermischen Kontakt für eine indirekte Wärmeübertragung stehen.

In dem dargestellten Ausführungsbeispiel weist die Brennkammer 2 einen kreisförmigen Querschnitt auf, wobei die Katalysatorkammer 3 einen kreisringförmigen Querschnitt aufweist und die Brennkammer 2 über deren gesamten Umfang umgibt. Es sind jedoch auch anderen Gestaltungen denkbar.

Der Wärmetauscher 4 ist in dem dargestellten Ausführungsbeispiel als Rohrbündelwärmetauscher, genauer als Gegenstrom-Rohrbündelwärmetauscher, gestaltet, welcher konzentrisch zu der Brennkammer 2 und der Katalysatorkammer 3 oberhalb der Brennkammer 2 angeordnet ist.

Der Wärmetauscher 4 weist einen ersten durch mehrere, parallel durchströmte Rohre gebildeten Medienkanal 41 und einen zweiten, von den Rohren durchdrungenen Medienkanal 42 auf. Die Anordnung, Anzahl und Dimensionierung der Rohre ist dabei in der Figur lediglich schematisch dargestellt und je nach Anwendungsfall durch den Fachmann geeignet wählbar. Der dargestellte Wärmetauscher 4 weist einen kreisringförmigen Querschnitt auf, wobei im Zentrum des Wärmetauschers 4 ein Kanal 40 vorgesehen ist, über welchen beispielsweise eine nicht dargestellte Zündlanze in die Brennkammer 2 einführbar ist.

In dem dargestellten Ausführungsbeispiel ist in der Zuführung des ersten Medienkanals 41 eine Mischzone 5 mit schematisch dargestellten Turbulenzerzeugern 50 vorgesehen.

Die schematisch durch gestrichelte Pfeile dargestellten vermischten Ausgangsstoffe werden der Brennkammer 2 über den ersten Medienkanal 41 des Wärmetauschers 4 zugeführt. Die Rohre des ersten Medienkanals 41 reichen in dem dargestellten Ausführungsbeispiel bis in die Brennkammer 2, wobei die Auslassöffnungen der Rohre in die Brennkammer 2 münden. Die Auslassöffnungen liegen dabei auf einem Kreis oder mehreren konzentrischen Kreisen.

Der als Rohrbündelwärmetauscher ausgeführte Wärmetauscher 4 ist derart ausgeführt und dimensioniert, dass die Ausgangsstoffe erst in der Brennkammer 2 zur Reaktion kommen. Dafür sind in einer Ausgestaltung die Querschnitte der Rohre des ersten Medienkanals 41 so klein gewählt, dass eine Strömungsgeschwindigkeit wesentlich höher ist als eine Brenngeschwindigkeit, die definiert als eine Ausbreitungsgeschwindigkeit einer Reaktionszone in ein brennbares Gas-Luftgemisch, und eine Aufenthaltszeit kürzer als eine Selbstzündzeit der Ausgangsstoffe ist.

Ein Querschnitt der Auslassöffnungen der Rohre ist vorzugsweise so gewählt, dass eine Austrittsgeschwindigkeit der Ausgangsstoffe so hoch ist, dass eine Rezirkulationszone in der Brennkammer 2 initiiert wird.

Die Katalysatorkammer 3 mündet in dem zweiten Medienkanal 42 des Wärmetauschers 4, sodass dieser vom einem aus der Katalysatorkammer 3 ausströmenden Produktstrom durchströmt wird. In dem dargestellten Ausführungsbeispiel ist ein Gehäusedeckel 6 an einem Auslass der Katalysatorkammer 3 vorgesehen, welche den Auslass gegenüber der Umgebung abschließt und einen die Katalysatorkammer 3 verlassenden Produktstrom zu dem zweiten Medienkanal 42 lenkt.

In einem Betrieb werden die Ausgangsstoffe, insbesondere ein Brennstoff aus einer biogenen Kohlenstoff-Quelle und ein Oxidationsmittel, beispielsweise Sauerstoff oder Luft, in der Mischzone 5 vorgemischt und in dem Wärmetauscher 4 im Gegenstrombetrieb unter Abkühlung eines aus der Katalysatorkammer 3 ausströmenden Produktstroms vorgewärmt. Die Vormischung der Ausgangsstoffe vor der Brennkammer 2 erlaubt eine homogene Reaktion der Ausgangsstoffe in der Brennkammer 2.

In der Brennkammer 2 findet eine partielle Oxidation der Ausgangsstoffe statt, bei welcher Wärme freigesetzt wird.

Ein die Brennkammer 2 verlassender Gasstrom wird der Reaktorkammer 3 zugeführt, welche mit einem Reformierungskatalysator gefüllt ist. In der Katalysatorkammer 3 erfolgt Dampfreformierung sowie eine damit einhergehende Trockenreformierung und Wassergas-Shift-Reaktion. Die Reaktionen in der Katalysatorkammer 3 laufen endotherm ab. Aufgrund des thermischen Kontakts der Katalysatorkammer 3 zu der Brennkammer 2 werden dabei den in der Katalysatorkammer 3 stattfindenden endothermen Reformierungsreaktion Wärme aus der Brennkammer 2 zugeführt.

Das Reaktorsystem 1 ermöglicht eine Erzeugung von Synthesegas mit einem hohen Kohlenstoffnutzungsgrad.

## Patentansprüche

1. Reaktorsystem zur partiellen Oxidation eines kohlenstoffhaltigen Gasgemischs, insbesondere zur Erzeugung von Synthesegas, umfassend eine Brennkammer (2) für eine partielle Oxidation und eine der Brennkammer (2) nachgeschaltete Katalysatorkammer (3) mit einem Katalysator für eine Dampfreformierung, **dadurch gekennzeichnet, dass** die Katalysatorkammer (3) als Ringkammer gestaltet ist, welche die Brennkammer (2) zumindest abschnittsweise umgibt, wobei die Ringkammer und die Brennkammer (2) in thermischen Kontakt für eine indirekte Wärmeübertragung stehen.

2. Reaktorsystem nach Anspruch 1, **dadurch gekennzeichnet, dass** ein Wärmetauscher (4) vorgesehen ist, welcher eingerichtet ist, um der Brennkammer (2) zugeführte Ausgangsstoffe mittels eines aus der Katalysatorkammer (3) abgeführten Produktstroms zu erwärmen, wobei der Wärmetauscher einen ersten Medienkanal (41) für die Ausgangsstoffe und einen zweiten Medienkanal (42) für den Produktstrom aufweist.

3. Reaktorsystem nach Anspruch 2, **dadurch gekennzeichnet, dass** eine Mischzone (5) für ein Vormischen der kalten Ausgangsstoffe in einer Zuführung des ersten Medienkanals (41) und/oder einer Zuführung des ersten Medienkanals (41) vorgeschaltet vorgesehen ist.

4. Reaktorsystem nach Anspruch 3, **dadurch gekennzeichnet, dass** die Mischzone (5) eine turbulente, verwirbelnde Strömungsführung aufweist und/oder in der Mischzone Turbulenzerzeuger (50) vorgesehen sind.

5. Reaktorsystem nach Anspruch 3 oder 4, **dadurch gekennzeichnet, dass** ein Auslass des ersten Medienkanals (41) in der Brennkammer (2) mündet so dimensioniert sind, dass in der Brennkammer (2) eine Rezirkulationszone geschaffen ist, wobei vorzugsweise der Auslass so dimensioniert ist, dass eine Austrittgeschwindigkeit der vorgemischten Ausgangsstoffe zwischen ca. 80 m/s und ca. 120 m/s beträgt.

6. Reaktorsystem nach einem der Ansprüche 2 bis 5, **dadurch gekennzeichnet, dass** der Wärmetauscher (4) als Rohrbündelwärmetauscher gestaltet ist, wobei der erste Medienkanal (41) eine Vielzahl an parallel durchströmbaren Rohren umfasst.

7. Reaktorsystem nach Anspruch 6, **dadurch gekennzeichnet, dass** Austrittsöffnungen der Rohre unmittelbar in der Brennkammer (2) münden.

8. Reaktorsystem nach Anspruch 6 oder 7, **dadurch gekennzeichnet, dass** die Rohre derart gestaltet sind, dass erst in der Brennkammer (2) eine Reaktion der Ausgangsstoffe erfolgt.

9. Reaktorsystem nach Anspruch 8, **dadurch gekennzeichnet, dass** Querschnitte der Rohre so dimensioniert sind, dass eine Aufenthaltszeit der vorgemischten Ausgangsstoffe in dem ersten Medienkanal (41) kürzer ist als eine Selbstzündzeit der Ausgangsstoffe und/oder eine Strömungsgeschwindigkeit der Ausgangsstoffe in dem ersten Medienkanal (41) höher ist als eine Brenngeschwindigkeit.

10. Reaktorsystem nach einem der Ansprüche 2 bis 9, **dadurch gekennzeichnet, dass** ein Auslass der Ringkammer in dem zweiten Medienkanal (42) mündet.

11. Verfahren zur partiellen Oxidation eines kohlenstoffhaltigen Gasgemischs, insbesondere zur Erzeugung von Synthesegas, in einem Reaktorsystem (1) umfassend eine Brennkammer (2) für eine partielle Oxidation und eine der Brennkammer (2) nachgeschaltete Katalysatorkammer (3) mit einem Katalysator für eine Dampfreformierung, **dadurch gekennzeichnet, dass** die Katalysatorkammer (3) in einem indirekten thermischen Kontakt zu der Brennkammer (2) steht und in der Katalysatorkammer (3) ablaufenden endothermen Reaktionen Wärme aus der Brennkammer (2) zugeführt wird.

12. Verfahren nach Anspruch 11, **dadurch gekennzeichnet, dass** der Brennkammer (2) zugeführte Ausgangsstoffe mittels eines aus der Katalysatorkammer (3) abgeführten Produktstroms in einem Wärmetauscher (4) erwärmt werden.

13. Verfahren nach Anspruch 12, **dadurch gekennzeichnet, dass** die der Brennkammer (2) zugeführten Ausgangsstoffe in dem Wärmetaucher (4) oder vor einer Zufuhr zu dem Wärmetauscher (4) vorgemischt werden.
